# EUROPEAN PATENT SPECIFICATION

(11) **EP 4 592 477 B1**
(45) Date of publication and mention of the grant of the patent: **01.07.2026**
(21) Application number: 25152069.8
(22) Date of filing: 15.01.2025
(51) Int. Cl.: E05B 47/00, F16H 1/32

(54) **ACTUATOR DEVICE FOR ACTUATING A DOOR-LOCK DEVICE ON A HOUSEHOLD APPLIANCE DOOR**
BETÄTIGUNGSVORRICHTUNG ZUR BETÄTIGUNG EINER TÜRVERRIEGELUNG AN EINER HAUSHALTSGERÄTETÜR
DISPOSITIF D'ACTIONNEMENT POUR ACTIONNER UN DISPOSITIF DE VERROUILLAGE DE PORTE SUR UNE PORTE D'APPAREIL MÉNAGER

(30) Priority: 24.01.2024 IT 202400001332
(43) Date of publication of application: 30.07.2025
(73) Proprietor: ELBI International S.p.A., 10129 Torino (IT)
(72) Inventor: SACCOCCI, Andrea, 10129 TORINO (TO) (IT)
(74) Representative: Tiburzi, Andrea

(56) References cited:
- EP-A1- 3 681 789
- WO-A2-2016/089806
- CN-Y- 2 401 730
- JP-A- S62 132 053

## Description

The present invention concerns an actuator device for actuating a door-lock device on a household appliance door.

### Field of invention

More specifically, the invention concerns an actuator device of the aforementioned type, designed and created in particular to allow the commanded opening of a door equipped with a door-lock, for example, for household appliances, such as washing machines, dryers, ovens, and the like, but which can be used for the automated actuation of any self-locking door.

In the following the description will be directed to a washing machine door, but it is clear that it should not be considered limited to this specific use.

### Prior art

As is well known, in the field of designing actuator devices for household appliances, such as washing machines and dishwashers, there are various technical solutions present on the market. However, these solutions have significant technical issues that limit their effectiveness and applicability.

One of the main problems concerns the use of gearboxes in current systems, which, despite being components suitable for modulating and controlling the movement of the mechanisms, have considerable disadvantages. Firstly, their large footprint is an obstacle to the aesthetics and compact design of household appliances required by the market. The bulk of gearboxes makes it difficult to integrate them into modern, minimalist designs, which require compact and discreet engineering solutions.

Furthermore, the structural complexity of gearboxes, due to their high number of components, leads to a greater probability of failure. Each additional component in a mechanical system not only increases the complexity of the assembly, but increases the likelihood of malfunctions. This factor is particularly critical in domestic environments, where the reliability and durability of the devices are very important.

Another technical issue concerns existing door-lock systems, which often rely on mechanisms based on rotating hooks or latches. Although these systems are functional, they have the significant disadvantage of not being easily automated.

An actuator device for operating a door-lock device of a door of a household appliance is known from the document WO 2016/089806 A2.

### Purpose of the invention

In light of the above, it is, therefore, the scope of the present invention to miniaturize the device by providing a solution that adapts effectively to small spaces. This is particularly relevant in household appliances where internal space is limited, and each component must be optimized to maximize efficiency and functionality in a minimal footprint.

A further purpose of the present invention is the optimization of the reduction ratio to guarantee the locking and unlocking times requested by the customer.

It is also the purpose of the present invention to reduce the number of moving components not only simplifies the design, but also reduces the risk of failure.

A further purpose of the present invention is to ensure that the device is versatile and modular, so that it can be easily adapted to a variety of household appliances and lock/unlock systems, thus providing a universal and flexible solution.

Finally, the invention aims at increasing the general reliability of the actuator device, reducing the probability of failures and damages through a simpler and more robust design, which uses fewer components subject to wear or malfunctions.

### Object of the invention

These and other results are obtained according to the invention with an actuation device for locking or unlocking doors in household appliances equipped with a cycloidal reducer suitable for transferring the movement for locking or unlocking the device itself. This gearbox is intended to reduce the rotation speed of an electric motor, while providing a high reduction ratio in a small footprint.

By means of this motion transfer system, it is possible to transfer the movement both through a linear and rotary mechanism.

The actuator device is able to incorporate a position reading system inside the actuator itself. Alternatively, it can be exploited the signal coming from the door-lock device with which it interfaces. This flexibility in position monitoring allows for control of the locking and unlocking process, improving the safety and operational efficiency of the appliance.

According to the present invention an actuator device for operating a door-lock device of a door of a household appliance, such as a washing machine, a dishwasher, and the like, is proposed, comprising: an electric motor having an output shaft; an activation assembly comprising an activator member, having a moving pin; a slider, movable from a rest position to an actuation position, having an eccentric shaped opening, presenting an internal lateral surface, wherein said moving pin is intended to engage with said internal lateral surface, an comprising an operating pin intended to engage with said door-lock device, so as to activate it when said slider is in said actuation position; characterized in that said activation assembly comprises a cycloidal reducer coupled to said shaft of said electric motor and said activating member, to operate said shaft of said electric motor.

Always according a preferred embodiment of the invention, said actuator device may present a first cycloidal seat, said activator member may have a second cycloidal seat, said cycloidal reducer has a housing, said cycloidal reducer may comprise a first cycloidal disk, configured to fit into said first cycloidal seat, a second cycloidal disk configured to fit into said second cycloidal seat, a bushing, arranged in said housing, and having an eccentric rotation, wherein said bushing is coupled to said shaft of said electric motor.

Still according to a preferred embodiment of the invention, said activator member may be a smooth cylindrical external surface, and, in correspondence with said first cycloidal seat, there may be a smooth cylindrical portion, which faces said external surface.

Advantageously according to a preferred embodiment of the invention, said first cycloidal seat and said smooth cylindrical portion may be obtained at the base of said cylindrical housing.

Further according to a preferred embodiment of the invention, said opening of said slider may have a flat portion, with which said moving pin is in contact in said actuation position, and a curved portion, with which said moving pin is in contact in said rest position.

Preferably according to the invention, said actuator may comprise a containment casing having a slot, wherein said operating pin protrudes from said slot.

Always according to a preferred embodiment of the invention, said actuator may comprise a first portion having a cylindrical housing for said electric motor, and a first flat half-shell, coupled to said housing, and a second portion, having a second flat half-shell, intended to couple with said first half-shell, wherein said slider is arranged between said first flat half-shell and said second flat half-shell, and wherein said slot is obtained on said second flat half-shell.

### Brief description of the figures

The present invention will be now described, for illustrative but not limitative purposes, according to its preferred embodiments, with particular reference to the figures of the enclosed drawings, wherein:
figure 1 shows an exploded view of an actuator device according to the present invention;
figure 2 shows details from the bottom of the actuator device of figure 1;
figure 3 shows a side sectional view of the actuator device in a rest position;
figure 4 is a section from top of figure 3;
figure 5 shows a side sectional view of the actuator device in an actuation position; and
figure 6 is a section from above of figure 5.

### Detailed description

In the various figures the similar parts will be indicated with the same reference numbers.

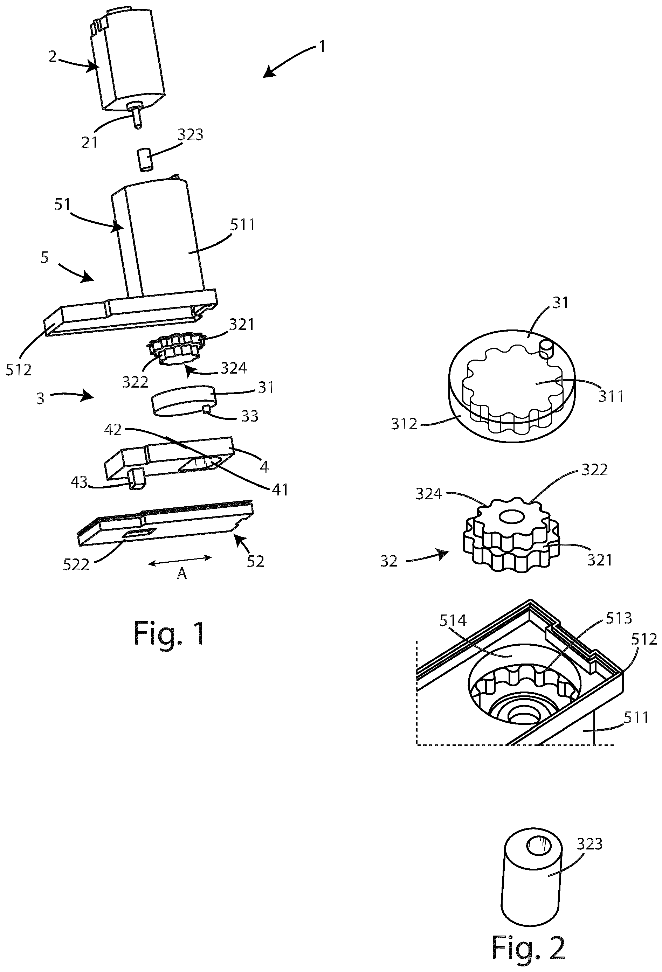

Referring to figures 1 and 2, an actuator device 1 can be seen, designed for locking a door of a household appliance (not shown in the figures), such as a washing machine or a dishwasher.

The actuator device 1 comprises an electric motor 2, an activation assembly 3, a slider 4, and a containment casing 5.

The electric motor 2 is equipped with an output shaft 21. The choice of motor can vary according to specific needs, such as size, power. In particular, in different embodiments, direct or alternating current electric motors, or brushless or stepper electric motors can be provided.

By way of example, the electric motor 2 can be of the direct current (DC) type, generally used for low power applications. Often such motors are controlled using Pulse Width Modulation (PWM), which is a technique for regulating the power supplied. According to this control system, power is provided by varying the pulse width in a periodic signal, thus changing the ratio between the time the signal is active (high) and the time it is inactive (low). Therefore, instead of providing a direct current, the PWM power mode is based on sending a series of high-frequency pulses. The "width" of these pulses determines the actual amount of energy transmitted to the device. This criterion reduces energy loss in the form of heat, providing fine, high-response control.

In some embodiments, a stepper motor can be installed, which offers very precise position control, or a brushless DC (BLDC) motor, which is generally very efficient and long-lasting.

The output shaft 21 of the motor 2 is suitable for transferring the driving force to the other components, to which they are keyed.

The activation assembly 3 comprises an activator member 31, moved by a cycloidal reducer 32.

The activator member 31 has a moving pin 33, which allows, as it will be better described below, the control of the movement of the slider 4.

The activator member 31 has internally a second cycloidal seat 311 and a smooth cylindrical external surface 312. The operation of the second cycloidal seat 311 and the external surface 312 will be better described below.

The activation assembly 3 also comprises a cycloidal reducer 32, coupled to the shaft 21 of the electric motor 2 (as better specified below), and to the activator member 31.

The cycloidal reducer 32 comprises a first cycloidal disk 321 and a second cycloidal disk 322. Furthermore, the cycloidal reducer 32 has a housing 324 and a bushing 323, arranged in the housing 324. The eccentrically rotating bushing 323 is coupled to the shaft 21 of engine 2.

The first cycloidal disk 321, with a larger diameter than the second cycloidal disk 322, however, is configured to fit into a first cycloidal seat 513.

The second cycloidal disk 322 is configured to fit into said second cycloidal seat 311 present on the activator member 31 (see figure 2, in which the activator member 31 is shown in transparency, to illustrate the second cycloidal seat 311).

In correspondence with the first cycloidal seat 513, a smooth cylindrical portion 514 is also provided, which faces, when the activator element 31 is mounted, the external surface 312.

A cycloidal gearbox 32 is a mechanical transmission device designed to achieve a reduction in the rotational speed of a drive shaft (the shaft 21 of motor 2), coupled with a corresponding increase in torque. This combination of speed reduction and torque increase makes it particularly effective for applications requiring precise and powerful motion control, as is the case with actuator devices 1.

Cycloidal gearboxes are particularly suitable for applications involving the use of large forces or exposure to heavy loads, as in the case at issue, to prevent the device from blocking.

The slider 4 is configured to move between a rest position and an actuation position (see the double arrow towards A).

The slider 4 has an eccentric opening 41 with a lateral internal surface 42 intended to engage with the moving pin 33.

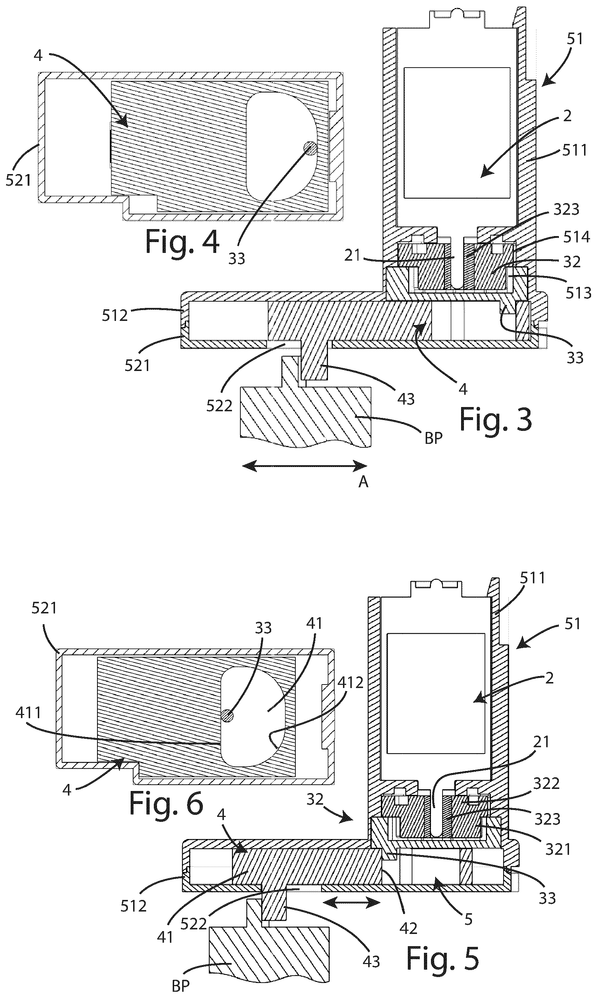

Said slider 4 also comprises an operating pin 43, which engages with the door-lock device BP (see figure 3-6) of the household appliance, which interfaces with an actuator (not shown in the figures) for example a locking slider or the like.

In the embodiment shown, the opening 41 of the slider 4 has a flat portion 411 and a curved portion 412, facing said flat portion 411, arranged so as to interact with the moving pin 33 in the different locking and unlocking positions of the door-lock BP of the household appliance.

The opening 41 of the slider 4 can have different alternative embodiments to obtain the same technical effect.

Finally, the containment casing 5 protects and supports the internal components. Said containment casing 5 comprises a first portion 51, having a cylindrical housing 511 for the electric motor 2, and a first flat half-shell 512, and a second portion 52, having a second flat half-shell 521, intended to couple with the first half-shell 512. The coupling can take place using screws, joints, glue and the like.

The slider 4 is arranged in the containment casing 53 obtained between said first 512 and second 521 flat half-shell.

A slot 522 is also provided on the second half-shell 521, which allows the operating pin 43 protruding for interacting with the door block BP of the household appliance, in which said actuator device 1 is installed. It is noted that said
The operation of the actuator device 1 described above is as follows.

Referring to figures 3 and 4, the actuator device 1 can be observed in the rest position, in which the moving pin 33 is in contact with the curved portion 412 of the opening 41.

Upon its activation, the electric motor 2 rotates the output shaft 21.

This movement is transmitted to the activator member 31, which thus rotates, thanks to the cycloidal reducer 32, whose first cycloidal disk 321 and second cycloidal disk 322 interact respectively with said first cycloidal seat 513 of the first portion 51 of said containment casing 5, and said second cycloidal seat 311 of the activator member 31.

In the presence of the cycloidal reducer 32, the movement is modulated to ensure precision and control.

The movement of the activator member 31 causes the movement of the slider 4 between the rest position and the actuation position (see arrows in the direction A). In particular, the moving pin 33 comes into contact with the flat portion 411 of the opening 41 (see figures 5 and 6).

In the locked position, the moving pin 33 being in contact with the flat portion 411 of the opening 41, allowing the operating pin 43 of the slider 4 to engage with the door-lock device BP of the household appliance, ensuring the unlock of the device itself.

When powering the actuator device 1, the cycloidal reducer 32 continues rotating until the activation of a micro internal or external to the actuator device 1, which confirms the complete implementation for the unlock of the door-lock device BP of the door. When the cycloidal reducer 32 is stopped, the actuator device 1 is already ready for a new actuation. To guarantee this condition, the electronics that control the actuator device 1 (and therefore the electric motor 2) must be able to manage a delay on the power supply of the electric motor 2 itself after receiving the actuation signal).

The interaction between the internal lateral surface 42 of the eccentric opening 41 and the moving pin 33 guarantees a smooth and controlled movement of the slider 4.

Furthermore, the containment casing 5 not only protects the internal components, but also contributes to the stability and correct alignment of the system. The slot 522 allows the linear movement of the drive pin 43.

The shape and dimensions of the opening 41 of the slider 4 can also be adapted to optimize the movement and interaction with the moving pin 33.

In other embodiments, the arrangement of the first cycloidal seat 513 and the smooth cylindrical portion 514, adjacent to it, can be arranged in positions, or obtained, instead of on the first portion 51 of the containment casing.

### Advantages

An advantage of the present invention is precision, compactness and low noise. These features are particularly advantageous in domestic environments, where excessive noise can be disruptive and space is often limited. The compactness of the invention allows for easy installation even in household appliances with limited internal spaces, while maintaining precise and silent operation.

A further advantage of the present invention is its high reduction ratio while occupying small spaces. This feature is fundamental as it allows the mechanism to be used in household appliances where space for additional components is minimal. The high reduction ratio also means that the invention can generate a powerful and controlled movement, essential for the effective locking or unlocking of the door, without requiring excessive bulk.

A further significant advantage is its adaptability to different household appliances. The invention is designed to be easily adaptable to different door-lock/unlock device configurations, making it a versatile solution for a wide range of applications. This flexibility allows household appliance manufacturers to implement the invention without having to design specific solutions for each model, reducing production costs and simplifying the assembly process.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Actuator device (1) for operating a door-lock device (BP) of a door of a household appliance, such as a washing machine, a dishwasher, and the like, comprising:
an electric motor (2) having an output shaft (21);
an activation assembly (3) comprising
an activator member (31), having a moving pin (33);
a slider (4),
movable from a rest position to an actuation position (A),
having an eccentric shaped opening (41), presenting an internal lateral surface (42), wherein said moving pin (33) is intended to engage with said internal lateral surface (42), and
comprising an operating pin (43) intended to engage with said door-lock device (BP), so as to activate it when said slider (4) is in said actuation position;
**characterized in that** said activation assembly (3) comprises a cycloidal reducer (32) coupled to said shaft (21) of said electric motor (2) and said activating member (31), to operate said shaft (21) of said electric motor (2).

2. Actuator device (1) according to claim 1, **characterized**
**in that** it presents a first cycloidal seat (513),
**in that** said activator member (31) has a second cycloidal seat (311)
**in that** said cycloidal reducer (32) has a housing (324),
**in that** said cycloidal reducer (32) comprises
a first cycloidal disk (321), configured to fit into said first cycloidal seat (513),
a second cycloidal disk (322) configured to fit into said second cycloidal seat (311),
a bushing (323), arranged in said housing (324), and having an eccentric rotation, wherein said bushing (323) is coupled to said shaft (21) of said electric motor (2).

3. Actuator device (1) according to the preceding claim, **characterized**
**in that** said activator member (31) has a smooth cylindrical external surface (312), and
**in that**, in correspondence with said first cycloidal seat (513), there is a smooth cylindrical portion (514), which faces said external surface (312).

4. Actuator device (1) according to any one of claims 2 or 3, **characterized in that** said first cycloidal seat (513) and said smooth cylindrical portion (514) are obtained at the base of said cylindrical housing (511).

5. Actuator device (1) according to any one of the preceding claims, **characterized in that** said opening (41) of said slider (4) has a flat portion (411), with which said moving pin (33) is in contact in said actuation position, and a curved portion (412), with which said moving pin (33) is in contact in said rest position.

6. Actuator device (1) according to any one of the preceding claims, **characterized in that** it comprises a containment casing (5) having a slot (522), wherein said operating pin (43) protrudes from said slot (522).

7. Actuator device (1) according to the preceding claim, **characterized in that** it comprises
a first portion (51), having
a cylindrical housing (511) for said electric motor (2), and
a first flat half-shell (512), coupled to said housing (511), and
a second portion (52), having a second flat half-shell (521), intended to couple with said first half-shell (521),
wherein said slider (4) is arranged between said first flat half-shell (512) and said second flat half-shell (521), and
wherein said slot is obtained on said second flat half-shell (521).

## Patentansprüche

1. Betätigungsvorrichtung (1) zum Betätigen einer Türverriegelung (BP) einer Tür eines Haushaltsgeräts, wie beispielsweise einer Waschmaschine, eines Geschirrspülers und dergleichen, mit:
ein Elektromotor (2) mit einer Abtriebswelle (21);
eine Betätigungsbaugruppe (3), umfassend
ein Betätigungselement (31) mit einem beweglichen Stift (33);
ein Schieberegler (4),
von einer Ruhestellung in eine Betätigungsstellung (A) bewegbar,
mit einer exzentrisch geformten Öffnung (41), die eine innere Seitenfläche (42) aufweist, wobei der bewegliche Stift (33) dazu bestimmt ist, in die innere Seitenfläche (42) einzugreifen, und
mit einem Betätigungsstift (43), der dazu bestimmt ist, in die Türverriegelungsvorrichtung (BP) einzugreifen, um diese zu betätigen, wenn sich der Schieber (4) in der Betätigungsposition befindet;
**dadurch gekennzeichnet dass** die Betätigungsvorrichtung (3) ein Zykloidgetriebe (32) umfasst, das mit der Welle (21) des Elektromotors (2) und dem Betätigungselement (31) gekoppelt ist, um die Welle (21) des Elektromotors (2) anzutreiben.

2. Betätigungsvorrichtung (1) nach Anspruch 1, **dadurch gekennzeichnet**,
insofern, als es einen ersten zykloidenförmigen Sitz (513) aufweist,
wobei das genannte Betätigungselement (31) einen zweiten zykloiden Sitz (311) aufweist
dass das Zykloidgetriebe (32) ein Gehäuse (324) aufweist,
dass das Zykloidgetriebe (32) umfasst
eine erste Zykloidscheibe (321), die so ausgebildet ist, dass sie in den ersten Zykloidsitz (513) passt,
eine zweite Zykloidscheibe (322), die so ausgebildet ist, dass sie in den zweiten Zykloidsitz (311) passt, eine in dem Gehäuse (324) angeordnete Buchse (323) mit exzentrischer Drehung, wobei die Buchse (323) mit der Welle (21) des Elektromotors (2) verbunden ist.

3. Betätigungsvorrichtung (1) nach dem vorstehenden Anspruch, **dadurch gekennzeichnet**,
wobei das genannte Betätigungselement (31) eine glatte, zylindrische Außenfläche (312) aufweist, und
darin, dass sich in Übereinstimmung mit dem genannten ersten zykloiden Sitz (513) ein glatter zylindrischer Abschnitt (514) befindet, der der genannten Außenfläche (312) zugewandt ist.

4. Betätigungsvorrichtung (1) nach einem der Ansprüche 2 oder 3, **dadurch gekennzeichnet, dass** der erste zykloide Sitz (513) und der glatte zylindrische Abschnitt (514) am Fuß des zylindrischen Gehäuses (511) ausgebildet sind.

5. Betätigungsvorrichtung (1) nach einem der vorstehenden Ansprüche, **dadurch gekennzeichnet, dass** die Öffnung (41) des Schiebers (4) einen flachen Abschnitt (411), mit dem der bewegliche Stift (33) in der Betätigungsstellung in Kontakt steht, und einen gekrümmten Abschnitt (412) aufweist, mit dem der bewegliche Stift (33) in der Ruhestellung in Kontakt steht.

6. Betätigungsvorrichtung (1) nach einem der vorstehenden Ansprüche, **dadurch gekennzeichnet, dass** sie ein Gehäuse (5) mit einem Schlitz (522) umfasst, wobei der Betätigungsstift (43) aus dem Schlitz (522) herausragt.

7. Betätigungsvorrichtung (1) nach dem vorstehenden Anspruch, **dadurch gekennzeichnet, dass** sie umfasst
einen ersten Abschnitt (51), mit
ein zylindrisches Gehäuse (511) für den Elektromotor (2), und
eine erste flache Halbschale (512), die mit dem Gehäuse (511) verbunden ist, und
einen zweiten Abschnitt (52) mit einer zweiten flachen Halbschale (521), die dazu bestimmt ist, mit der ersten Halbschale (521) verbunden zu werden,
wobei der Schieber (4) zwischen der ersten flachen Halbschale (512) und der zweiten flachen Halbschale (521) angeordnet ist, und
wobei der Schlitz an der zweiten flachen Halbschale (521) ausgebildet ist.

## Revendications

1. Dispositif d'actionnement (1) pour actionner un dispositif de verrouillage (BP) de porte d'un appareil ménager, tel qu'une machine à laver, un lave-vaisselle ou tout autre appareil similaire, comprenant:
un moteur électrique (2) muni d'un arbre de sortie (21);
un ensemble d'activation (3) comprenant
un élément d'actionnement (31), comportant une goupille mobile (33);
un curseur (4),
pouvant passer d'une position de repos à une position d'actionnement (A),
présentant une ouverture de forme excentrique (41), comportant une surface latérale interne (42), dans laquelle ladite goupille mobile (33) est destinée à venir en prise avec ladite surface latérale interne (42), et
comprenant une goupille de commande (43) destinée à venir en prise avec ledit dispositif de verrouillage de porte (BP), de manière à l'actionner lorsque ledit curseur (4) se trouve dans ladite position d'actionnement;
**caractérisé en ce que** ledit ensemble d'actionnement (3) comprend un réducteur cycloïdal (32) couplé audit arbre (21) dudit moteur électrique (2) et audit organe d'actionnement (31), afin d'entraîner ledit arbre (21) dudit moteur électrique (2).

2. Dispositif d'actionnement (1) selon la revendication 1, **caractérisé**
**en ce qu'**il comporte un premier siège cycloïdal (513),
**en ce que** ledit élément d'actionnement (31) comporte un deuxième siège cycloïdal (311)
dans la mesure où ledit réducteur cycloïdal (32) comporte un carter (324),
**en ce que** ledit réducteur cycloïdal (32) comprend
un premier disque cycloïdal (321), conçu pour s'emboîter dans ledit premier logement cycloïdal (513),
un deuxième disque cycloïdal (322) conçu pour s'emboîter dans ledit deuxième logement cycloïdal (311),
une douille (323), disposée dans ledit boîtier (324) et présentant une rotation excentrique, ladite douille (323) étant couplée audit arbre (21) dudit moteur électrique (2).

3. Dispositif d'actionnement (1) selon la revendication précédente, **caractérisé**
**en ce que** ledit élément d'activation (31) présente une surface externe cylindrique lisse (312), et
en ce sens qu'en correspondance avec ledit premier siège cycloïdal (513), se trouve une partie cylindrique lisse (514) qui fait face à ladite surface externe (312).

4. Dispositif d'actionnement (1) selon l'une quelconque des revendications 2 ou 3, **caractérisé en ce que** ledit premier siège cycloïdal (513) et ladite partie cylindrique lisse (514) sont formés à la base dudit boîtier cylindrique (511).

5. Dispositif d'actionnement (1) selon l'une quelconque des revendications précédentes, **caractérisé en ce que** ladite ouverture (41) dudit coulisseau (4) comporte une partie plate (411), avec laquelle ladite tige mobile (33) est en contact dans ladite position d'actionnement, et une partie courbe (412), avec laquelle ladite tige mobile (33) est en contact dans ladite position de repos.

6. Dispositif d'actionnement (1) selon l'une quelconque des revendications précédentes, **caractérisé en ce qu'**il comprend un boîtier de confinement (5) muni d'une fente (522), dans lequel ladite tige de commande (43) fait saillie à partir de ladite fente (522).

7. Dispositif d'actionnement (1) selon la revendication précédente, **caractérisé en ce qu'**il comprend
une première partie (51), ayant
un boîtier cylindrique (511) destiné audit moteur électrique (2), et
une première demi-coque plate (512), reliée audit boîtier (511), et
une deuxième partie (52), comportant une deuxième demi-coque plate (521), destinée à s'assembler avec ladite première demi-coque (521),
dans lequel ledit curseur (4) est disposé entre ladite première demi-coque plate (512) et ladite deuxième demi-coque plate (521), et
dans lequel ladite fente est formée sur ladite deuxième demi-coque plate (521).
